# EUROPÄISCHE PATENTSCHRIFT

(11) **EP 2 720 970 B1**
(45) Veröffentlichungstag und Bekanntmachung des Hinweises auf die Patenterteilung: **05.10.2016**
(21) Anmeldenummer: 12732574.4
(22) Anmeldetag: 18.06.2012
(51) Int. Cl.: B65H 75/44, H02G 11/02, G02B 6/44

(54) **VORRICHTUNG ZUM AB- UND AUFWICKELN EINER ODER MEHREREN LEITUNGEN**
DEVICE FOR UNWINDING AND WINDING UP ONE OR MORE LINES
DISPOSITIF POUR DÉROULER ET ENROULER UNE OU PLUSIEURS LIGNES

(30) Priorität: 17.06.2011 LU 91826
(43) Veröffentlichungstag der Anmeldung: 23.04.2014
(73) Patentinhaber: Ipalco B.V., 3447 GK Woerden (NL)
(72) Erfinder: WIDEGREN, Michael, CH-6900 Lugano (CH)
(74) Vertreter: Office Freylinger
(86) Internationale Anmeldenummer: PCT/EP2012/061604
(87) Internationale Veröffentlichungsnummer: WO 2012/172110

(56) Entgegenhaltungen:
- WO-A1-92/01323
- DE-C- 830 371
- DE-U1- 8 522 019
- GB-A- 691 817
- JP-A- 1 043 469
- JP-A- 58 074 466
- US-A- 2 141 909
- US-A- 2 518 071
- US-A- 3 144 218
- US-A- 3 372 887

## Beschreibung

### Technisches Gebiet

Die vorliegende Erfindung betrifft allgemein Vorrichtungen zum Ab- und Aufwickeln einer oder mehreren Leitungen zur unterbrechungsfreien Verbindung zwischen zwei Verbindungspunkten, insbesondere sogenannte Leitungstrommeln, wie Kabeltrommeln, Schlauchtrommeln, usw.

### Stand der Technik

Vorrichtungen zum Ab- und Aufwickeln einer oder mehreren Leitungen sind allgemein bekannt, haben jedoch je nach Anwendung verschiedene Nachteile.

Sogenannte Kabeltrommeln (eigentlich Leitungsroller) haben z.B. den Nachteil, dass die Stromzufuhr zwar über durchgehende Leitungen erfolgt, zum Ab- oder Aufrollen die Verbindungen zur Trommel jedoch getrennt werden müssen um ein Verdrehen der angeschlossenen Leitungen zu verhindern, da die Steckverbindungen mit der Trommel verbunden sind und so beim Wickelvorgang mitdrehen.

Bei sogenannten Automatik-Kabelrollern oder Zugleitungsrollern ist eine Trennung der Steckverbindungen während dem Ab-, bzw. Aufrollvorgang nicht nötig da innerhalb des Rollers die Verbindung über Schleifringe oder -kontakte erfolgt. Dies führt jedoch prinzipbedingt zu einem erhöhten mechanischen Verschleiß und/oder einer gesteigerten Verschmutzungsanfälligkeit. Auch im Fall von fluidführenden Leitungen muss eine Dichtigkeit der Drehkupplungen über längere Benutzungszyklen gewährleistet sein.

Außerdem ist die Verwendung von Schleifringen oder Drehkupplungen nicht immer durchführbar. Zum einen verbietet sich die Verwendung von Schleifkontakten in manchen Bereichen z.B. in der Signalübertragung, da Schleifkontakte hier zu erheblichen Beeinträchtigungen führen würden. Zum anderen ist eine solche Lösung auch technisch sehr aufwändig in Fällen wo eine größere Anzahl Leitungen über Schleifringe oder Drehkupplungen oder gemischt mehrere elektrische und fluidführende Leitungen zuverlässig zu überbrücken sind. Außerdem ist in diesem Fall eine kompakte und/oder wirtschaftliche Ausführung der Rolle kaum durchführbar.

Um die Benutzung von Schleifkontakten zu umgehen sind außerdem Lösungen bekannt in denen eine Leitung durchgehend über zwei Trommeln geführt wird, wobei eine fest steht und eine drehbar angeordnet ist. Beim Abwickeln des nutzbaren Teils der Leitung von der drehbaren Trommel wickelt sich ein anderer Teil der Leitung um die feststehende Trommel auf. Obwohl solche Lösungen kein Abstecken der Verbindungen während dem Wickelvorgang benötigen, bereitet insbesondere das Aufwickeln auf der feststehenden Trommel oft Probleme durch Verwerfungen und Schlaufenbildung der Leitung. Außerdem scheinen solche Vorrichtungen für die Führung mehrerer Leitungen ungeeignet.

DE 85 22 019 U1 beschreibt eine Vorrichtung zum Verstauen eines Anschlusskabels mit einer Aufwickeltrommel ohne Schleifkontakte, wobei das Anschlusskabel einen sich in axialer Richtung der Aufwickeltrommel erstreckenden Abschnitt enthält. Dieser Abschnitt weist eine frei im Raum angeordnete Kabelspirale auf, die an ihren Enden jeweils in einer Öffnung der Aufwickeltrommel gehalten ist. Die Kabelspirale besteht aus mehreren, z. B. drei bis vier, Windungen die im Raum zwischen den als Führungs- und Halteelemente vorgesehenen Öffnungen freiliegend angeordnet sind. GB 691817 beschreibt eine schleifkontaktlose Vorrichtung zum gleichzeitigen Auf- und Abwickeln elektrischer Leiter oder Leitungen auf eine drehbare Trommel, wobei ein Abschnitt der Leiter oder Leitungen axial innerhalb der Trommel spiralförmig geführt werden kann.

Schlussendlich wäre es im Hinblick auf die immer umfangreichere Mess-, Kontroll- und Automatisierungstechnik wünschenswert, dass zu den klassischen Anwendungsleitungen zusätzlich (ggf. auch nachträglich) Informations- oder Signalleitungen in einer einzigen Vorrichtung mitgeführt werden könnten.

### Aufgabe der Erfindung

Eine Aufgabe der vorliegenden Erfindung ist es demnach, eine Vorrichtung zum Ab- und Aufwickeln einer oder mehreren Leitungen zur unterbrechungsfreien Verbindung zwischen zwei Verbindungspunkten zur Verfügung zu stellen die keine Trennung der Leitungen während des Ab- oder Aufwickelvorgangs benötigt und gleichzeitig eine kompakte Ausführung erlaubt.

### Allgemeine Beschreibung der Erfindung

Diese Aufgabe wird erfindungsgemäß gelöst durch eine Vorrichtung zum (wenigstens teilweise) Ab- und Aufwickeln einer oder mehreren Leitungen zur unterbrechungsfreien Verbindung jeder der einen oder mehreren Leitungen zwischen zwei Verbindungspunkten, wobei die unterbrechungsfreie Verbindung zwischen einem festen ersten Verbindungspunkt und einem variabel entfernten oder jeweils einem von mehreren unterschiedlich entfernten zweiten Verbindungspunkt herstellbar ist. Die Vorrichtung umfasst einen drehbaren Wickelkörper zum Ab- und Aufwickeln der einen oder mehreren Leitungen. Die Leitung(en) wird/werden vom ersten festen Verbindungspunkt in einem ersten Teilabschnitt von einer feststehenden zum Wickelkörper koaxialen ersten Position zu einer der ersten Position gegenüberliegenden, zweiten Position und von dieser zweiten Position zu einer im wesentlichen in einer Ebene mit der ersten Position aber mit dem Wickelkörper drehbaren dritten Position geführt. Die Leitung(en) im ersten Teilabschnitt wird/werden zwischen der ersten und zweiten Position und zwischen der zweiten und dritten Position freistehend helixförmig geführt, wobei die zweite Position unabhängig vom Wickelkörper frei drehbar angeordnet ist. Die Leitung(en) wird/werden von der dritten Position in einem zweiten Teilabschnitt zur Umfangsseite des Wickelkörpers und ggf. über eine Anzahl Wicklungen um den Wickelkörper zum zweiten Verbindungspunkt geführt.

Die erfindungsgemäße Vorrichtung erlaubt es eine oder mehrere Leitungen platzsparend auf- und abzuwickeln je nach Bedarf ohne Entfernen, bzw. Verdrehen der daran befestigten Verbindungsleitungen. Die Länge des helixförmigen Abschnitts zwischen einem feststehendem und einem drehbaren Punkt in Abhängigkeit mit dem minimalen Biegeradius der Leitung(en) bestimmt dabei im Prinzip die mögliche Anzahl der Umdrehungen beim Ab- und Aufwickeln.

Das Ab- und Aufwickeln einer oder mehreren Leitungen bedeutet in der Praxis, dass die Leitungen prinzipbedingt nur zu einem (sogenannten nutzbaren) Teil ihrer gesamten Länge ab- und aufwickelbar sind. Dieser nutzbare Teil entspricht im wesentlichen dem im Bereich des Wickelkörpers befindlichen Abschnitts der Leitungen wenn die Leitungen darauf vollständig aufgewickelt sind.

Eine unterbrechungsfreie Verbindung im Sinne der Erfindung bedeutet, dass die Leitungen innerhalb der Vorrichtung nicht durch Verbindungselemente, wie Schleifkontakte, Drehkupplungen oder ähnliches unterbrochen sind, sondern durchgehend vom ersten zum zweiten Verbindungspunkten ausgeführt sind.

Erfindungsgemäß wird/werden die Leitung(en) zwischen der ersten und zweiten Position (im Raum freistehend) helixförmig geführt. Falls mehrere Leitungen vorhanden sind, können diese zwischen der ersten und zweiten Position seitlich solidarisiert sein oder nicht und so entweder eine oder mehrere Helices bilden.

Erfindungsgemäß wird/werden die Leitung(en) zusätzlich zwischen der zweiten und dritten Position (im Raum freistehend) helixförmig geführt.

Erfindungsgemäß ist die zweite Position unabhängig vom Wickelkörper frei drehbar angeordnet. Diese Ausführung ermöglicht im Prinzip eine Verdopplung der nutzbaren Länge des helixförmigen Abschnitts im Vergleich zu einer Ausführungsform in der die zweite und dritte Position zur ersten Position drehbar aber relativ zueinander fest sind. Der besondere Vorteil ist, dass dies eine platzsparendere Ausführung ohne größeren Aufwand erlaubt und dass darüber hinaus auch unerwünschte Verwerfungen und Schlaufenbildung weitestgehend vermieden werden, was die Zuverlässigkeit und die Betriebssicherheit der Vorrichtung auch über längere Betriebszyklen deutlich erhöht.

In einer bevorzugten Ausführungsform der Vorrichtung ist die zweite Position zur ersten Position axial versetzt angeordnet. Der besondere Vorteil einer exzentrischen Anordnung der zweiten relativ zur ersten Position ist eine bessere Raumausnutzung innerhalb des für die Helix benötigten Raumes. Dabei wird der Abstand (A) zwischen der zweiten Position und einer zur ersten Position koaxialen Position vorzugsweise so gewählt, dass 0,1 d < A < 10 d, bevorzugt 0,2 d < A < 5 d, ganz besonders bevorzugt 0,5 d < A < 2 d beträgt, wobei d der mittlere (effektive) Durchmesser der Helix ist.

Der mittlere (effektive) Durchmesser des Wickelkörpers (D) bestimmt die Länge der abwickelbaren Leitung pro Umdrehung, während der mittlere (effektive) Durchmesser der Helix (d) größtenteils von dem minimalen Biegeradius der Leitung(en), sowie der gewünschten Anzahl und Durchmesser der Leitungen vorgegeben wird. Der mittlere Durchmesser des Wickelkörpers (D) wird daher in der Praxis bevorzugt relativ groß zum mittleren Durchmesser des Leitungsträgers (d) gewählt, z.B. 1,1 d < D < 100 d oder mehr, bevorzugt 1,5 d < D < 50 d, ganz besonders bevorzugt 2 d < D < 25 d.

Die Breite des Leitungsträgers wird bevorzugt so gewählt, dass mindestens die gewünschte Anzahl Leitungen untergebracht werden kann. Ein weiterer Vorteil der Erfindung ist es, dass es sogar möglich ist ohne größeren Aufwand nachträglich weitere Leitungen einzufügen, wenn der Leitungsträger ausreichend dimensioniert ist.

In einer bevorzugten Ausführungsform ist der Wickelkörper als hohler Zylinder, bevorzugt als Trommel ausgebildet. Dabei wird der koaxial angeordnete flexible Leitungsträger seitlich versetzt (außerhalb) oder platzsparender innerhalb dieses Zylinders angeordnet.

Leitungen im Sinne der Erfindungen sind energie-, informations-/signal-(z.B. galvanisch oder optisch) oder stoffführende Leitungen, z.B. ein- oder mehradrige Elektrokabel, ein- oder mehradrige optische Kabel (Lichtleiter), ein- oder mehrfach Gas-, Flüssigkeits- oder Feststoff(druck)schläuche, usw. Bei mehradrigen oder mehrfach Leitungen können die Adern oder Kanäle parallel, verdrillt oder koaxial verlaufen. Im Sinne dieser Erfindung kann je nach Kontext der Begriff "Leitung" sowohl die einzelne "Ader" als auch die mehradrige oder mehrkanalige Leitung selbst, z.B. einen Elektrokabel, bezeichnen.

Der Führung mehrerer Leitungen in der Vorrichtung ist somit im Prinzip keine Grenzen gesetzt und die Vorrichtung ist deshalb sehr vielseitig einsetzbar. Mehrere Leitungen können demzufolge (wenigstens abschnittweise) parallel, verdrillt, koaxial oder gemischt parallel, verdrillt und/oder koaxial je nach Art der Leitung oder dessen Anwendung geführt werden. In einer bevorzugten Vorrichtung sind mehrere Leitungen parallel angeordnet.

Bevorzugt sind diese Leitungen wenigstens abschnittsweise miteinander verbunden um die Handhabung während des Wickelvorgangs zu erleichtern, z.B. wenigstens im auf- und abwickelbaren Bereich seitlich parallel zueinander, so dass sie im abgewickelten Zustand eine gerade Leitung bilden.

### Kurze Beschreibung der Figuren

Im Folgenden wird nun eine Ausgestaltung der Erfindung anhand der beiliegenden Figuren beschrieben. Diese zeigen:
Fig. 1 einen Teilquerschnitt einer nicht erfindungsgemäßen Ausführung und
Fig. 2 einen Teilquerschnitt einer Ausführung der Erfindung.

Weitere Einzelheiten und Vorteile der Erfindung können der nachfolgenden ausführlichen Beschreibung möglicher Ausführungsformen der Erfindung anhand der beiliegenden Figuren entnommen werden.

### Beschreibung einer Ausgestaltung der Erfindung

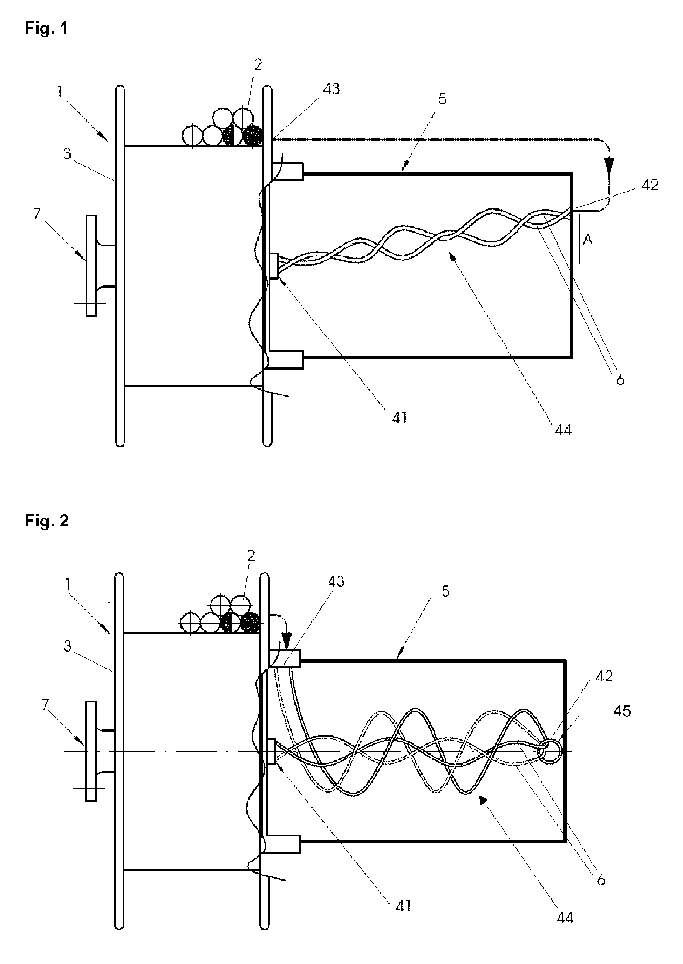

Die in der Fig. 1, zur Illustration gezeigte Vorrichtung 1 zum Ab- und Aufwickeln einer oder mehreren Leitungen 2 umfasst einen drehbaren Wickelkörper, hier in Form einer Trommel 3. In der in Fig. 1 gezeigten Vorrichtung führen die Leitungen von einem festen ersten Verbindungspunkt 7 in einem ersten Teilabschnitt von einer ersten Position 41 über eine zweite Position 42 zu einer dritten Position 43. In der gezeigten Variante ist die Helix 44 zwischen der ersten 41 und der zweiten Position 42 vorgesehen. Die Position 42 ist in Fig. 1 nicht koaxial zur Trommel 3 angeordnet, sondern in einem Abstand A. Die Helix 44 ist seitlich der Trommel 3 angeordnet und durch ein Gehäuse 5 geschützt. Das Gehäuse 5 ist in diesem Fall an der drehbaren Trommel 3 befestigt. Die Adern 6 der Leitung 2 sind im Bereich der Helix einzeln geführt.

Die in der Fig. 2, zur Illustration der Erfindung, gezeigte Vorrichtung 1 zum Ab- und Aufwickeln einer oder mehreren Leitungen 2 umfasst einen drehbaren Wickelkörper, hier in Form einer Trommel 3. Im gezeigten Fall ist die Helix 44 seitlich der Trommel 3 angeordnet und durch ein Gehäuse 5 geschützt. Das Gehäuse 5 ist in diesem Fall an der drehbaren Trommel 3 befestigt. Die Adern 6 der Leitung 2 sind im Bereich der Helix einzeln geführt.

In der in Fig. 2 gezeigten erfindungsgemäßen Variante führen die Leitungen von einem festen ersten Verbindungspunkt 7 in einem ersten Teilabschnitt von einer ersten Position 41 über eine zweite Position 42 zu einer dritten Position 43. In der gezeigten Variante ist die Helix 44 zwischen der ersten 41 und der zweiten Position 42 und zwischen der zweiten 42 und der dritten Position 43 vorgesehen. Die zweite Position 42 wird durch einen Haken oder wie in Fig. 2 als Ring 45 dargestellt, durch welchen die Adern 6 hindurchgeführt oder befestigt werden. Vorzugsweise ist die zweite Position 42 zum Gehäuse 5 frei drehbar angebracht, sodass beim Ab- und Aufwickeln drehen kann. Der frei drehbare Wendepunkt innerhalb der doppelt geführten Helix erlaubt im Prinzip eine ähnlich hohe Anzahl Umdrehungen der Trommel wie eine doppelt so lange einzeln geführte Helix, verkleinert aber deutlich die Ausmaße des Gehäuses 5. Beim Ab- und Aufwickeln dreht sich der Ring 45 mit der halben Winkelgeschwindigkeit der Trommel 3. Die Position 42 könnte auch ähnlich wie in Fig. 1 nicht koaxial zur Trommel 3 angeordnet sein.

### Zeichenerklärung:

- 1: Vorrichtung zum Ab- und Aufwickeln einer oder mehreren Leitungen
- 2: Leitungen (auf der Trommel)
- 3: Trommel
- 41: erste Position
- 42: zweite Position
- 43: dritte Position
- 44: Helix
- 45: Ring
- 5: Gehäuse
- 6: Leitungen (bevorzugt als einzelne Adern im Bereich der Helix)
- 7: erster Verbindungspunkt

## Patentansprüche

1. Vorrichtung (1) zum Ab- und Aufwickeln einer oder mehreren Leitungen (2) zur unterbrechungsfreien Verbindung jeder der einen oder mehreren Leitungen zwischen zwei Verbindungspunkten, wobei die unterbrechungsfreie Verbindung zwischen einem festen ersten Verbindungspunkt (7) und einem variabel entfernten oder jeweils einem von mehreren unterschiedlich entfernten zweiten Verbindungspunkt herstellbar ist, wobei die Vorrichtung einen drehbaren Wickelkörper (3) zum Ab- und Aufwickeln der einen oder mehreren Leitungen umfasst, wobei die Leitung(en) vom ersten festen Verbindungspunkt in einem ersten Teilabschnitt von einer feststehenden, zum Wickelkörper koaxialen ersten Position (41) zu einer der ersten Position gegenüber liegenden, zweiten Position (42) und von dieser zweiten Position zu einer im wesentlichen in einer Ebene mit der ersten Position aber mit dem Wickelkörper drehbaren dritten Position (43) geführt ist/sind, wobei die Leitung(en) im ersten Teilabschnitt zwischen der ersten und zweiten Position helixförmig geführt ist/sind, wobei die Leitung(en) von der dritten Position in einem zweiten Teilabschnitt zur Umfangsseite des Wickelkörpers und ggf. über eine Anzahl Wicklungen um den Wickelkörper zum zweiten Verbindungspunkt geführt ist/sind, **dadurch gekennzeichnet, dass** die Leitung(en) im ersten Teilabschnitt zwischen der zweiten und dritten Position helixförmig geführt ist/sind und dass die zweite Position unabhängig vom Wickelkörper frei drehbar angeordnet ist.

2. Vorrichtung nach Anspruch 1, wobei die zweite Position zur ersten Position axial versetzt angeordnet ist.

3. Vorrichtung nach einem der Ansprüche 1 bis 2, wobei der Abstand A zwischen der zweiten Position und einer zur ersten Position koaxialen Position so gewählt, dass 0,1 d < A < 10 d, bevorzugt 0,2 d < A < 5 d, ganz besonders bevorzugt 0,5 d < A < 2 d, wobei d der mittlere (effektive) Durchmesser der Helix ist.

4. Vorrichtung nach einem der Ansprüche 1 bis 3, wobei der Wickelkörper als hohler Zylinder, bevorzugt als Trommel ausgebildet ist.

5. Vorrichtung nach Anspruch 4, wobei der erste Teilabschnitt der Leitung(en) seitlich dieses hohlen Zylinders, bzw. dieser Trommel angeordnet ist.

6. Vorrichtung nach Anspruch 4, wobei der erste Teilabschnitt der Leitung(en) innerhalb dieses hohlen Zylinders, bzw. dieser Trommel angeordnet ist.

7. Vorrichtung nach einem der Ansprüche 1 bis 6, wobei mehrere elektrische und/oder fluidführende Leitungen wenigstens abschnittweise parallel, verdrillt, koaxial oder gemischt parallel, verdrillt und/oder koaxial miteinander verbunden sind.

8. Vorrichtung nach einem der Ansprüche 1 bis 6, wobei mehrere elektrische und/oder fluidführende Leitungen parallel angeordnet sind.

9. Vorrichtung nach Anspruch 8, wobei die mehreren Leitungen wenigstens abschnittweise seitlich verbunden sind.

10. Vorrichtung nach einem der Ansprüche 1 bis 9, wobei der mittlere Durchmesser der Helix der Leitung(en) d kleiner als der mittlere Durchmesser des Wickelkörpers D ist, bevorzugt 1,1 d < D < 100 d, ganz besonders bevorzugt 1,5 d < D < 50 d und insbesondere 2 d < D < 25 d.

11. Vorrichtung nach einem der Ansprüche 1 bis 10, wobei die Leitungen energie-, informations-/signal- oder stoffführende Leitungen sind, z.B. ein- oder mehradrige Elektrokabel, ein- oder mehradrige galvanische oder optische Leiter, ein- oder mehrfach Gas-, Flüssigkeits- oder Feststoff(druck)schläuche.

## Claims

1. A device (1) for unwinding and winding up one or more lines (2) for uninterrupted connection of each of the one or more lines between two connection points, wherein the uninterrupted connection may be produced between a fixed first connection point (7) and a second connection point which is at a variable distance or in each case one of a plurality of second connection points which are at different distances, wherein the device comprises a rotatable winding body (3) for unwinding and winding up the one or more lines, wherein the line(s) is/are guided in a first sub-portion from the first fixed connection point from a stationary first position (41) coaxial with the winding body to a second position (42) located opposite the first position and from said second position to a third position (43) substantially in a plane with the first position but rotatable with the winding body, wherein the line(s) is/are guided helically in the first sub-portion between the first and second positions, wherein the line(s) is/are guided from the third position in a second sub-portion to the circumferential side of the winding body and optionally via a number of windings around the winding body to the second connection point, **characterised in that** the line(s) is/are guided helically in the first sub-portion between the second and third positions and **in that** the second position is arranged freely rotatably independently of the winding body.

2. A device according to claim 1, wherein the second position is arranged at an axial offset to the first position.

3. A device according to one of claims 1 to 2, wherein the distance A between the second position and a position coaxial with the first position is selected such that 0.1 d < A < 10 d, preferably 0.2 d < A < 5 d, particularly preferably 0.5 d < A < 2 d, wherein d is the average (effective) diameter of the helix.

4. A device according to one of claims 1 to 3, wherein the winding body takes the form of a hollow cylinder, preferably a drum.

5. A device according to claim 4, wherein the first sub-portion of the line(s) is arranged laterally of said hollow cylinder or said drum.

6. A device according to claim 4, wherein the first sub-portion of the line(s) is arranged within said hollow cylinder or said drum.

7. A device according to one of claims 1 to 6, wherein a plurality of electrical and/or fluid-conveying lines are connected together at least in portions in a parallel, twisted or coaxial manner or in a mixture of parallel, twisted and/or coaxial manners.

8. A device according to one of claims 1 to 6, wherein a plurality of electrical and/or fluid-conveying lines are arranged in parallel.

9. A device according to claim 8, wherein the plurality of lines are laterally connected at least in portions.

10. A device according to one of claims 1 to 9, wherein the average diameter d of the helix of the line(s) is smaller than the average diameter D of the winding body, preferably 1.1 d < D < 100 d, particularly preferably 1.5 d < D < 50 d and in particular 2 d < D < 25 d.

11. A device according to one of claims 1 to 10, wherein the lines are power-, data-/signal- or material-conveying lines, for example single- or multi-core electrical cables, single- or multi-core galvanic or optical conductors or single or multiple gas, liquid or solids (pressure) hoses.

## Revendications

1. Dispositif (1) destiné à l'enroulage et au déroulage d'une ou plusieurs conduite(s) (2) en vue d'une liaison ininterrompue de chacune des une ou plusieurs conduite(s) entre deux points de liaison, dans lequel la liaison ininterrompue peut être réalisée entre un premier point de liaison (7) fixe et un deuxième point de liaison éloigné de manière variable ou respectivement un parmi plusieurs points de liaison différemment éloignés, dans lequel le dispositif comprend un support d'enroulage rotatif (3) destiné à l'enroulage et au déroulage de la ou des conduite(s), dans lequel la (les) conduite(s) est/sont guidée(s) à partir du premier point de liaison fixe dans une première section partielle depuis une première position fixe (41), coaxiale par rapport au support d'enroulage, vers une deuxième position (42) opposée à la première position et depuis ladite deuxième position vers une troisième position (43) située essentiellement dans un plan comprenant la première position mais rotative avec le support d'enroulage, dans lequel la (les) conduite(s) est/sont guidée(s) de manière hélicoïdale dans une première section partielle entre les première et deuxième positions, dans lequel la (les) conduite(s) est/sont guidée(s) depuis la troisième position dans une deuxième section partielle vers un côté périphérique du support d'enroulage et le cas échéant vers un deuxième point de liaison par l'intermédiaire d'un certain nombre de spires autour du support d'enroulage,
**caractérisé en ce que** la (les) conduite(s) est/sont guidée(s) de manière hélicoïdale dans une première section partielle entre les deuxième et troisième positions et la deuxième position est agencée rotative de manière libre indépendamment du support d'enroulage.

2. Dispositif selon la revendication 1, dans lequel la deuxième position est agencée de manière axialement décalée par rapport à la première position.

3. Dispositif selon la revendication 1 ou 2, dans lequel l'écart A entre la deuxième position et une position coaxiale par rapport à la première position est choisi de telle manière que 0,1 d<A<10 d, de manière préférée 0,2 d<A<5 d, de manière tout particulièrement préférée 0,5 d <A<2 d, d représentant le diamètre moyen (efficace) de l'hélice.

4. Dispositif selon l'une quelconque des revendications 1 à 3, dans lequel le support d'enroulage est réalisé sous la forme d'un cylindre creux, de manière préférée sous la forme d'un tambour.

5. Dispositif selon la revendication 4, dans lequel la première section partielle de la (des) conduite(s) est agencée sur le côté dudit cylindre creux, ou bien dudit tambour.

6. Dispositif selon la revendication 4, dans lequel la première section partielle de la (des) conduite(s) est agencée à l'intérieur dudit cylindre creux, ou bien dudit tambour.

7. Dispositif selon l'une quelconque des revendications 1 à 6, dans lequel plusieurs conduites électriques et/ou de transport de fluide sont reliées les unes aux autres au moins par section de manière parallèle, torsadée ou coaxiale, ou bien conjointement de manière parallèle, torsadée et/ou coaxiale.

8. Dispositif selon l'une quelconque des revendications 1 à 6, dans lequel plusieurs conduites électriques et/ou de transport de fluide sont agencées de manière parallèle.

9. Dispositif selon la revendication 8, dans lequel les plusieurs conduites sont reliées latéralement au moins par section.

10. Dispositif selon l'une quelconque des revendications 1 à 9, dans lequel le diamètre moyen d de l'hélice de la (des) conduite(s) est inférieur au diamètre moyen D du support d'enroulage, de manière préférée 1,1 d<D<100 d, de manière particulièrement préférée 1,5 d<D<50 d, et de manière la plus particulièrement préférée 2 d<D<25 d.

11. Dispositif selon l'une quelconque des revendications 1 à 10, dans lequel les conduites sont des conduites amenant de l'énergie, des informations/un signal ou une substance, par exemple des câbles électriques monofilaires ou multifilaires, des conducteurs monofilaires ou multifilaires galvaniques ou optiques, des tuyaux (à pression) simple ou multiple pour gaz, liquide ou solide.
